# EUROPEAN PATENT SPECIFICATION

(11) **EP 4 368 509 B1**
(45) Date of publication and mention of the grant of the patent: **11.02.2026**
(21) Application number: 22207328.0
(22) Date of filing: 14.11.2022
(51) Int. Cl.: B64D 11/04, E05B 47/00, E05C 19/16

(54) **AIRCRAFT GALLEY CONTAINERS**
FLUGZEUGBORDKÜCHENBEHÄLTER
CONTENEURS DE CUISINE D'AÉRONEF

(43) Date of publication of application: 15.05.2024
(73) Proprietor: B/E Aerospace, Inc., Winston-Salem, NC 27105 (US)
(72) Inventor: NEGRE, Ergen Sawit, 4234 Sto. Tomas (PH); BERMUDO, Jobelle Cantuba, 4217 Lipa City (PH)
(74) Representative: Dehns

(56) References cited:
- EP-A1- 3 878 747
- CN-U- 204 883 956
- CN-U- 207 747 714
- US-A1- 2008 083 242
- US-A1- 2019 048 621

## Description

### TECHNICAL FIELD

The present disclosure relates to aircraft galley containers (or aircraft galley inserts), and in particular to locking features therefor.

### BACKGROUND

Aircraft galley containers, or aircraft galley inserts, sometimes require the option to be locked. The locking of such containers prevents theft of food, beverages or other products or items within the aircraft galley containers. The locks may also assist in preventing unintended opening of the aircraft galley containers.

Some examples of aircraft galley containers include microwave ovens, ovens, and refrigerators include enclosures that seal when the door is closed. Such seals are important in these containers to maintain particular temperatures within the containers, either by keeping heat within the container, or keeping heat out of the container.

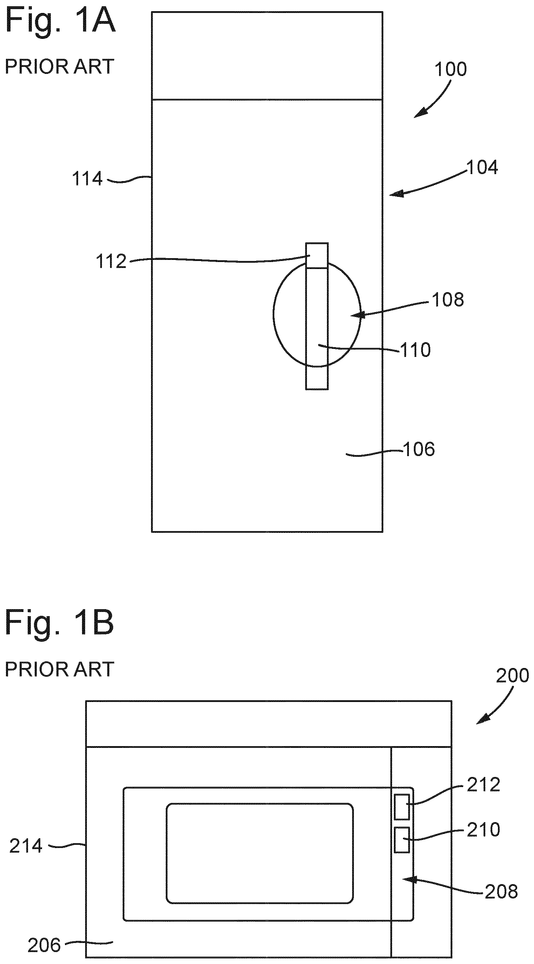

Figures 1A and 1B illustrate front views of such previous galley containers, in particular a refrigerator 100 and a microwave oven 200.

The refrigerator 100 has an enclosure housing 104 and a door 106. The door 106 has an opening mechanism 108, which includes a handle 110 and a lock 112 (which may also be referred to as a latch). The lock 112 includes a movable member (not visible), which is either rotatable, or linearly movable, together with an engagement feature configured to electively engage the movable member. The movable member and engagement feature selectively interact to either allow or prevent the door 106 from opening. This may be by preventing the handle 110 from rotating, or by engagement to restrict opening of the door. The handle 110 is rotated and pulled to release a latch or bolt from a recess in the enclosure housing 104 and to swing the door to an open position from a hinged side 114.

The opening mechanism 108 thus includes movable parts in addition to the door 106, which is moveable about the hinged side 114 in and of itself.

The microwave oven 200 also includes an enclosure housing 204 and a door 206. The microwave oven 200 includes a spring-based opening mechanism 208 having a lock 212, configured similarly to the lock 112 of the refrigerator in preventing opening of the door 206, or swinging of the door 206 about the hinged side 214. The opening mechanism 208 also has a push-to-open release button 210 mechanically coupled to a latch lever (not visible).

When the release button 210 is depressed while the lock 212 is in an unlocked state, the latch lever releases a spring (not visible) which provides a force to swing open the door 206 about the hinged side 214.

The opening mechanism 208 thus also includes movable parts in addition to the door 206, which is moveable about the hinged side 214 in and of itself.

There is a desire for improved aircraft galley containers with a reduced propensity for wear. EP 3 878 747 A1 discloses a prior art aircraft galley container as set forth in the preamble of claim 1.

US 2008/083242 A1 discloses a prior art locking means for locking the inner chamber of a device and a device with locking means.

CN 207 747 714 U discloses a prior art sliding door for a refrigerating truck.

CN 204 883 956 U discloses a prior art machine for selling fresh vegetables and fruit.

US 2019/048621 A1 discloses a prior art electromagnetic cabinet lock.

### SUMMARY

From a first aspect, there is provided an aircraft galley container as recited in claim 1.

Features of embodiments are set forth in the dependent claims.

Any of the above features may be combined in any combination unless expressly stated otherwise, and insofar as they fall within the scope of the appended claims.

### BRIEF DESCRIPTION OF DRAWINGS

Various embodiments of this disclosure will now be described by way of example only, with reference to the accompanying drawings in which:
Figure 1A shows a prior art aircraft galley container having a rotatable handle opening mechanism;
Figure 1B shows a prior art aircraft galley container having a mechanical push-spring opening mechanism;
Figure 2 shows an aircraft galley container in accordance with an embodiment of the invention;
Figure 3 shows an aircraft galley container in accordance with another embodiment of the invention;
Figure 4 shows an aircraft galley container in accordance with another embodiment of the invention;
Figure 5 shows an aircraft galley system in accordance with an embodiment of the invention.

### DETAILED DESCRIPTION OF DRAWINGS

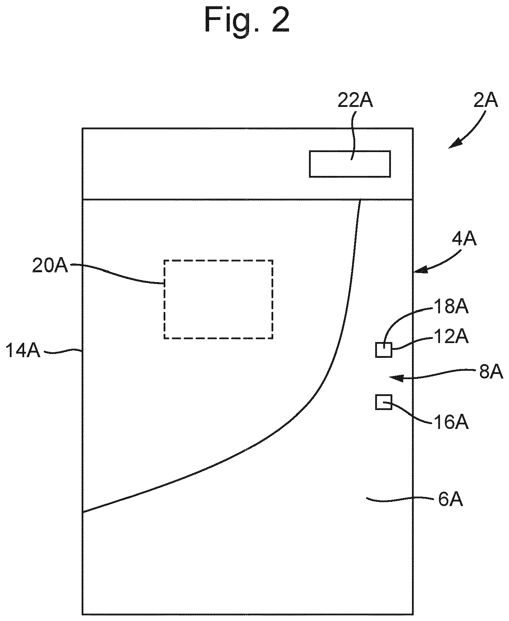

With reference to figure 2, there is described an aircraft galley refrigerator 2A, which is a type of aircraft galley container.

The refrigerator 2A has an enclosure housing 4A which defines a cavity therein. The illustrated refrigerator 2A is generally cuboid in shape, but other shapes of refrigerator are envisaged. The cavity within the enclosure housing 4A is configured to be held at a low temperature and to store food or beverages, or other items at said low temperature. The temperature may be about 1 to 10 °C, for example about 3 to 7 °C, or about 5 °C. The enclosure housing 4A includes: three adjacent walls including a back wall and two opposing side walls; a top panel; and a bottom panel. The enclosure housing 4A in and of itself therefore defines an open cavity.

An exemplary refrigerator 2A can have a width measured between external surfaces of the side walls being from about 200 mm to about 400 mm, for example between 250 mm to 350 mm, or more particularly about 290 mm or 287 mm. An exemplary refrigerator can have a depth measured from back surfaces of the back wall to the front surface of the door 6A (introduced below) being about 400 mm to 800 mm, or from about 500 to 700 mm, or about 550 mm, or 546 mm, or alternatively about 650 mm, for example, 656 mm. An exemplary refrigerator can have a height measured from a bottom surface of the bottom panel to a top surface of the top panel being about 400 mm to 700 mm, or from about 500 to 600 mm, or about 560 mm, for example, 563 mm.

The refrigerator 2A also includes a door 6A, opposing the back wall and hingedly connected to one of the side walls along a hinged side 14A. The hinged connection may take any suitable form, such as, but not limited to, a leaf hinge or a gooseneck hinge.

The door 6A is moveable, by swinging about the hinged side 14A, between a closed position and an open position. In the closed position, the door 6A closes the cavity within the enclosure housing 4A, thereby preventing access to the contents of the cavity. When the door 6A is in the open position, the cavity is accessible, such that contents thereof may be inserted or removed. The door 6A includes forms a seal with the enclosure housing 4A when in the closed position. The seal may be provided by a combination of foam and silicone material located where the door 6A contacts the enclosure housing 4A to provide an air-tight seal maintaining the temperature within the enclosure housing 4A and preventing escape or ingress of air. For example, the seal may be in the form of a shaped foam element with a silicone coating or sleeve. The seal may be provided by a gasket at or adjacent the periphery of the door 6A and configured to be compressed between the periphery of the door 6A and the forward edges of each of the top panel, bottom panel, and side walls of the enclosure housing 4A. The gasket may be formed from compressible material, for example a polymeric material.

The door 6A illustrates includes an opening system 8A. The opening system 8A does not include a movable, for example rotatable, handle. Rather, an electronically controlled lock 12A is used and, when the lock 12A is in an unlocked state, the door 6A may be swung open about the hinged side 14A by a direct force acting on the door 6A. For example, a user may bias the door open by pulling on a side edge of the door 6A. Alternatively, a fixed handle, immobile with respect to the door 6A could be provided on the door 6A, such that a user may grip the handle to swing the door 6A open.

The electronically controlled lock 12A is in the form of an electromagnetic lock 12A. Such an electromagnetic lock 12A includes an electromagnet, which is connected to a source of power that may be switched on or off to selectively provide an electromotive force, with the power turned on, or no force when the power is turned off. The electromagnetic lock 12A also includes a magnetic, for example, ferromagnetic, armature plate. The electromagnet and armature plate are arranged face to face, such that when the electromagnet is energised, or turned on, the armature plate is pulled toward and held in contact with the electromagnet (or a casing thereof). The electromagnetic field provided may be such that the armature plate experiences minimal force at a distance from the electromagnet, such as when the door 6A is in the open position, and a substantial force, enough to prevent manual opening of the door, when the door is closed. This force may be called a holding force, and may be, for example, over about 3 kN, or, in some arrangements between 1 kN and 5 kN. Alternative values of holding forces may be used. The electromagnet may be fixed to the enclosure housing 4A and the armature plate fixed to the door 6A or vice versa. The electromagnet being on the door may make connecting a power source to the electromagnet simpler.

The force between the electromagnet and the armature plate may assist in compressing the gasket or seal between the door 6A and the enclosure housing 4A. In order to do so, the electromagnet and the armature plate may be located such that when they are in contact the spacing between the door 6A and the enclosure housing 4A is less than a width of the gasket between the door 6A and the enclosure housing 4A. When the gasket is held in a recess on one or other of the door 6A or housing enclosure 4A, the spacing between the bottom of the recess and the other of the door 6A or housing enclosure 4A is less than the width of the gasket when the electromagnet and armature plate are in contact.

In this way, the electronically controlled lock 12A may be placed in either a locked mode, with the door 6A in the closed position, and the electromagnet energised, or in an unlocked mode, with the electromagnetic not energised.

To select which mode the electronically controlled lock 12A is placed into, the aircraft galley container 2A includes a control system. The illustrated control system includes a first switch 16A and a second switch 18A. These switches 16A, 18A may be touch sensors, such as capacitive touch electrodes, or alternatively, push switches. The first switch 16A is operable to place the electronically controlled lock 12A into the locked mode, by switching on the electromagnet in the above described arrangement. The second switch 18A is operable to place the electronically controlled lock 12A into the unlocked mode, by switching off the electromagnet. The switches may include indicia to show which switch is which, and furthermore may include lights, which light up whichever switch is active. That is, when the electronically controlled lock 12A is in the locked mode, the first switch may light up, and when the electronically controlled lock 12A is in the unlocked mode, the second switch may light up.

In another arrangement, the control system is provided by a singular switch, which is operable to switch the electronically controlled lock 12A between the locked mode and the unlocked mode and vice versa. The singular switch may also be a touch sensor, such as a capacitive touch electrode, or alternatively, a push switch. The singular switch may include a pair of lights, such as a red and green light, to indicate whether pressing the switch will lock or unlock the electronically controlled lock 12A.

The control system may also include a radio frequency identifier (RFID) unit, which can disable the switches when an identifying RFID device is not in proximity with the RFID unit, and enable the switches when such an identifying RFID device is in proximity with the RFID unit. Such a proximity may be defined as being within about 2m, or within 1m. This ensures that only a user with a suitable identifying RFID device may operate the lock and unlock switches. The RFID unit and device could in some arrangements have a closer proximity threshold, such as within about 5cm, such that the device may be used in place of the switches to unlock the electronically controlled lock 12A. When such a close-proximity RFID device is within a threshold distance, e.g., 5cm, of the RFI unit, the electronically controlled lock is placed into the unlocked mode. This allows for keyless unlocking, and does not even require pressing of a switch or touch sensor.

Illustrated is an optional window 20A, which is transparent, or possibly translucent, through which a user may see the contents of the refrigerator 2A. The window 20A is typically within the door 6A of the refrigerator 2A. As will be appreciated, multiple windows may be included, and/or windows of a different shape to that illustrated.

The refrigerator may also include a display 22A indicating whether the lock 12A is in a locked or unlocked mode. The display 22A may be on a top panel, or a head-panel, of the enclosure housing 4A, and may be called a human machine interface in some arrangements. This is particularly useful in the embodiment where only a singular switch or touch pad is provided both for locking and unlocking the electronically controlled lock 12A.

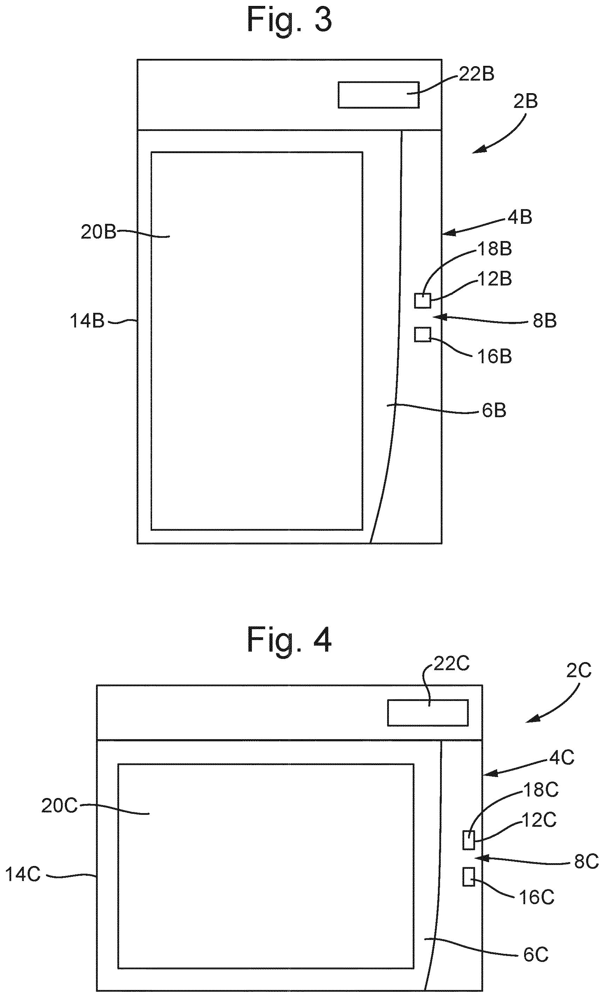

With reference to figure 3, there is described an aircraft galley oven 2B, a type of aircraft galley container.

The aircraft galley oven 2B is similar to the aircraft galley refrigerator 2A, except that, instead of keeping the contents thereof cool, the oven 2B keeps the contents hot, and thus, rather than keeping heat outside of the refrigerator 2A, heat is kept inside the oven 2B.

The aircraft galley oven 2B includes all the components of the aircraft galley refrigerator 2A described above, but the corresponding components are not described at length for conciseness. They are given the same reference numeral appended with a 'B', rather than an 'A'.

The exemplary aircraft galley oven 2B may have the same dimensions as the aircraft galley refrigerator 2A as discussed above.

With reference to figure 4, there is described an aircraft galley microwave oven 2C, a type of aircraft galley container.

Typically, aircraft galley microwave ovens 2C have a different shape, usually shorter, than aircraft galley ovens 2B, but this is only exemplary, and alternative shapes may be taken.

The aircraft galley microwave oven 2C may have a similar opening system as the oven 2B and refrigerator 2A, or may additionally include a spring to bias the microwave oven 2C open when the electronically controlled lock 12C is unlocked.

The aircraft galley microwave oven 2C includes all the components of the aircraft galley refrigerator 2A described above, but the corresponding components are not described at length for conciseness. They are given the same reference numeral appended with a 'C', rather than an 'A'.

An exemplary aircraft galley microwave oven 2C can have a width measured between external surfaces of the side walls being from about 300 mm to about 500 mm, for example between 350 mm to 450 mm, or more particularly about 420 mm or 419 mm. An exemplary aircraft galley microwave oven 2C can have a depth measured from back surfaces of the back wall to the front surface of the door 6C being about 500 mm to 650 mm, or from about 550 to 600 mm, or about 570 mm. An exemplary aircraft galley microwave oven 2C can have a height measured from a bottom surface of the bottom panel to a top surface of the top panel being about 200 mm to 350 mm, or from about 250 to 300 mm, or about 270 mm, for example, 269 mm.

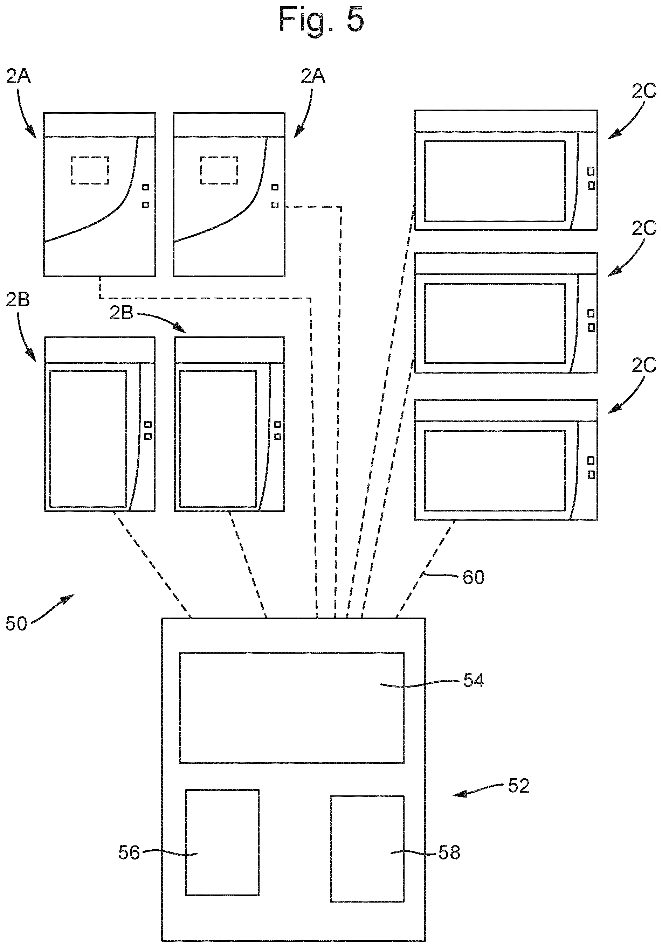

With reference to figure 5, there is described an aircraft galley system 50 including a plurality of aircraft galley containers 2A, 2B, 2C and a central control system 52.

The central control system 52 includes a display 54 which is configured to show a user which containers 2A, 2B, 2C are in a locked mode, and which are in an unlocked mode. The display 54 may also show other information relating to the containers 2A, 2B, 2C, such as when the microwave ovens 2C or ovens 2B are in use, or how much stock, be that beverages or food or other items is in each of the containers 2A, 2B, 2C. Additionally, the display may indicate a temperature of each container 2A, 2B, 2C, for example, to prevent opening the containers 2A, 2B, 2C too often and thereby losing heat, or letting heat into the containers 2A, 2B, 2C too much.

The central control system 52 includes input controls 56, so a user may provide instructions to set each, every, or any combination of the containers 2A, 2B, 2C into either locked or unlocked modes as desired. The input controls 56 could also be used to change which information is provides to the user on the display 54.

The central control system 52 in the illustrated embodiment also has a central transceiver 58 configured to send and receive signals 60 respectively to and from the containers 2A, 2B, 2C. These signals can send information about the state of the containers 2A, 2B, 2C to the central control system 52 and can send instructions from the central control system 52 to the containers 2A, 2B, 2C regarding whether to be placed into a locked mode or an unlocked mode. The central transceiver is configured to communicate with a transceiver on the control system associated with each individual container 2A, 2B, 2C.

The illustrated signals 60 are wireless signals; however, in alternative arrangements, the central controller could be wired to the containers 2A, 2B, 2C, and thereby the transceiver could be omitted.

The central control system 52 could be a control panel in the aircraft, or example, in the cockpit thereof, for control by a pilot, or alternatively in the cabin of the aircraft for control by the crew.

Alternatively, the central control system 52 could be a portable personal electronic device, or a part thereof, which a user, for example, pilot or crew, or ground crew, could operate.

It is envisaged that multiple control systems, such as multiple control panels, multiple portable personal electronic devices, or a combination thereof, could be used to provide multiple users with the simultaneous ability to provide controls to the containers 2A, 2B, 2C. In that instance, a hierarchy of which control device or panel has priority over others may be provided.

As will be appreciated, the number and variety of aircraft galley containers 2A, 2B, 2C shown in figure 5 is only exemplary and a different number of containers may be provided. Furthermore, this figure is a schematic view. The precise arrangement of aircraft galley containers within the aircraft cabin (or elsewhere) may take any suitable arrangement.

## Claims

1. An aircraft galley container (2A; 2B; 2C) comprising:
an enclosure housing (4A; 4B; 4C) defining a cavity within the enclosure housing (4A; 4B; 4C);
a door (6A; 6B; 6C) moveable between an open position and a closed position, wherein in the closed position, the door (6A; 6B; 6C) closes and seals the cavity;
an electronically controlled lock (12A; 12B; 12C); and
a control system (16A, 18A; 16B, 18B; 16C, 18C; 52) for selectably placing the electronically controlled lock (12A; 12B; 12C) in a locked mode and an unlocked mode, wherein in the locked mode, the door (6A; 6B; 6C) is prohibited from opening and in the unlocked mode, the door (6A; 6B; 6C) is able to open,
**characterised in that**
the electronically controlled lock (12A; 12B; 12C) is an electromagnetic lock (12A; 12B; 12C) having an electromagnet and an armature plate, wherein the electromagnet and armature plate are arranged face to face, and the electromagnet is associated with one of the door (6A; 6B; 6C) or enclosure housing (4A; 4B; 4C) and the armature plate is associated with the other of the door (6A; 6B; 6C) or enclosure housing (4A; 4B; 4C).

2. The aircraft galley container (2B; 2C) of claim 1, wherein the aircraft galley container (2B; 2C) is an oven (2B; 2C).

3. The aircraft galley container (2C) of claim 2, wherein the oven (2C) is a microwave oven (2C).

4. The aircraft galley container (2A) of claim 1, wherein the aircraft galley container (2A) is a refrigerator (2A).

5. The aircraft galley container (2A; 2B; 2C) of any preceding claim, further comprising a gasket arranged at a perimeter of the enclosure housing (4A; 4B; 4C) and configured to contact and seal with an inner surface of the door (6A; 6B; 6C) when the door (6A; 6B; 6C) is in the closed position for sealing the cavity.

6. The aircraft galley container (2A; 2B; 2C) of any preceding claim, wherein the control system comprises a singular switch, wherein when a user presses the switch the singular switch changes which mode of the locked mode or unlocked mode the electronically controlled lock is in.

7. The aircraft galley container (2A; 2B; 2C) of claim 6, wherein the singular switch is a touch sensor.

8. The aircraft galley container (2A; 2B; 2C), wherein the touch sensor is a capacitive touch electrode.

9. The aircraft galley container (2A; 2B; 2C) of any of claims 1 to 5, wherein the control system (16A, 18A; 16B, 18B; 16C, 18C) comprises a first switch (16A; 16B; 16C) and a second switch (18A; 18B; 18C), wherein when a user presses the first switch (16A; 16B; 16C) the electronically controlled lock (12A; 12B; 12C) is placed into the locked mode and when a user presses the second switch (18A; 18B; 18C) the electronically controlled lock (12A; 12B; 12C) is placed into the unlocked mode.

10. The aircraft galley container (2A; 2B; 2C) of claim 9, wherein the first switch (16A; 16B; 16C) and the second switch (18A; 18B; 18C) are each a touch sensor, optionally a capacitive touch electrode.

11. The aircraft galley container (2A; 2B; 2C) of any of claims 1 to 5, wherein the control system comprises a radio frequency identification (RFID) unit, configured to place the electronically controlled lock (12A; 12B; 12C) into the unlocked mode when a secondary RFID device is brought into proximity with the RFID unit, and to place the electronically controlled lock (12A; 12B; 12C) into the locked mode when the secondary RFID device is not in proximity with the RFID unit.

12. The aircraft galley container (2A; 2B; 2C) of any of claims 1 to 5, wherein the control system comprises a transceiver configured to receive input from a device (52) remote from the aircraft galley container (2A; 2B; 2C) containing instructions for placing the electronically controlled lock (12A; 12B; 12C) into one of the locked and unlocked modes.

13. An aircraft galley system (50) comprising:
a plurality of aircraft galley containers (2A; 2B; 2C) as set forth in claim 12; and
a central control device (52), wherein the central control device (52) is the device (52) remote from the aircraft galley container (2A; 2B; 2C).

14. The aircraft galley system (50) of claim 13, wherein the central control device (52) is a portable personal electronic device.

15. The aircraft galley system (50) of claim 13, wherein the central control device (52) is a central controller for a cockpit of an aircraft.

## Patentansprüche

1. Flugzeugbordküchenbehälter (2A; 2B; 2C), umfassend:
ein Umschließungsgehäuse (4A; 4B; 4C), das einen Hohlraum innerhalb des Umschließungsgehäuses (4A; 4B; 4C) definiert;
eine Tür (6A; 6B; 6C), die zwischen einer offenen Position und einer geschlossenen Position bewegbar ist, wobei die Tür (6A; 6B; 6C) in der geschlossenen Position den Hohlraum verschließt und abdichtet;
ein elektronisch gesteuertes Schloss (12A; 12B; 12C); und
ein Steuersystem (16A, 18A; 16B, 18B; 16C, 18C; 52) zum wahlweisen Versetzen des elektronisch gesteuerten Schlosses (12A; 12B; 12C) in einen verriegelten Modus und einen entriegelten Modus, wobei im verriegelten Modus die Tür (6A; 6B; 6C) am Öffnen gehindert wird und im entriegelten Modus die Tür (6A; 6B; 6C) in der Lage ist, sich zu öffnen,
**dadurch gekennzeichnet, dass**
das elektronisch gesteuerte Schloss (12A; 12B; 12C) ein elektromagnetisches Schloss (12A; 12B; 12C) mit einem Elektromagneten und einer Ankerplatte ist, wobei der Elektromagnet und die Ankerplatte einander gegenüberliegend angeordnet sind und der Elektromagnet einem der Tür (6A; 6B; 6C) oder des Gehäuses (4A; 4B; 4C) zugeordnet ist und die Ankerplatte dem anderen der Tür (6A; 6B; 6C) oder des Gehäuses (4A; 4B; 4C) zugeordnet ist.

2. Flugzeugbordküchenbehälter (2B; 2C) nach Anspruch 1, wobei der Flugzeugbordküchenbehälter (2B; 2C) ein Ofen (2B; 2C) ist.

3. Flugzeugbordküchenbehälter (2C) nach Anspruch 2, wobei der Ofen (2C) ein Mikrowellenofen (2C) ist.

4. Flugzeugbordküchenbehälter (2A) nach Anspruch 1, wobei der Flugzeugbordküchenbehälter (2A) ein Kühlschrank (2A) ist.

5. Flugzeugbordküchenbehälter (2A; 2B; 2C) nach einem der vorhergehenden Ansprüche, ferner umfassend eine Dichtung, die an einem Umfang des Umschließungsgehäuses (4A; 4B; 4C) angeordnet und dazu konfiguriert ist, eine Innenfläche der Tür (6A; 6B; 6C) zu berühren und abzudichten, wenn sich die Tür (6A; 6B; 6C) in der geschlossenen Position befindet, um den Hohlraum abzudichten.

6. Flugzeugbordküchenbehälter (2A; 2B; 2C) nach einem der vorhergehenden Ansprüche, wobei das Steuersystem einen einzelnen Schalter umfasst, wobei der einzelne Schalter, wenn ein Benutzer den Schalter drückt, ändert, in welchem Modus des verriegelten Modus oder entriegelten Modus sich das elektronisch gesteuerte Schloss befindet.

7. Flugzeugbordküchenbehälter (2A; 2B; 2C) nach Anspruch 6, wobei der einzelne Schalter ein Berührungssensor ist.

8. Flugzeugbordküchenbehälter (2A; 2B; 2C), wobei der Berührungssensor eine kapazitive Berührungselektrode ist.

9. Flugzeugbordküchenbehälter (2A; 2B; 2C) nach einem der Ansprüche 1 bis 5, wobei das Steuersystem (16A, 18A; 16B, 18B; 16C, 18C) einen ersten Schalter (16A; 16B; 16C) und einen zweiten Schalter (18A; 18B; 18C) umfasst, wobei, wenn ein Benutzer den ersten Schalter (16A; 16B; 16C) drückt, das elektronisch gesteuerte Schloss (12A; 12B; 12C) in den verriegelten Modus versetzt wird, und wenn ein Benutzer den zweiten Schalter (18A; 18B; 18C) drückt, das elektronisch gesteuerte Schloss (12A; 12B; 12C) in den entriegelten Modus versetzt wird.

10. Flugzeugbordküchenbehälter (2A; 2B; 2C) nach Anspruch 9, wobei der erste Schalter (16A; 16B; 16C) und der zweite Schalter (18A; 18B; 18C) jeweils ein Berührungssensor, optional eine kapazitive Berührungselektrode sind.

11. Flugzeugbordküchenbehälter (2A; 2B; 2C) nach einem der Ansprüche 1 bis 5, wobei das Steuersystem eine Funkfrequenzidentifikationseinheit (RFID-Einheit) umfasst, die dazu konfiguriert ist, das elektronisch gesteuerte Schloss (12A; 12B; 12C) in den entriegelten Modus zu versetzen, wenn eine sekundäre RFID-Vorrichtung in die Nähe der RFID-Einheit gebracht wird, und das elektronisch gesteuerte Schloss (12A; 12B; 12C) in den verriegelten Modus zu versetzen, wenn die sekundäre RFID-Vorrichtung sich nicht in der Nähe der RFID-Einheit befindet.

12. Flugzeugbordküchenbehälter (2A; 2B; 2C) nach einem der Ansprüche 1 bis 5, wobei das Steuersystem einen Sender-Empfänger umfasst, der dazu konfiguriert ist, Eingaben von einer vom Flugzeugbordküchenbehälter (2A; 2B; 2C) entfernten Vorrichtung (52) zu empfangen, die Anweisungen enthalten, um das elektronisch gesteuerte Schloss (12A; 12B; 12C) in einen des verriegelten und des entriegelten Modus zu versetzen.

13. Flugzeugbordküchensystem (50), umfassend:
eine Vielzahl von Flugzeugbordküchenbehältern (2A; 2B; 2C) nach Anspruch 12; und
eine zentrale Steuervorrichtung (52), wobei die zentrale Steuervorrichtung (52) die vom Flugzeugbordküchenbehälter (2A; 2B; 2C) entfernte Vorrichtung (52) ist.

14. Flugzeugbordküchensystem (50) nach Anspruch 13, wobei die zentrale Steuervorrichtung (52) eine tragbare persönliche elektronische Vorrichtung ist.

15. Flugzeugbordküchensystem (50) nach Anspruch 13, wobei die zentrale Steuervorrichtung (52) eine zentrale Steuerung für ein Cockpit eines Flugzeugs ist.

## Revendications

1. Conteneur de cuisine d'aéronef (2A ; 2B ; 2C), comprenant :
un boîtier de réception (4A ; 4B ; 4C) définissant une cavité à l'intérieur du boîtier de réception (4A ; 4B ; 4C) ;
une porte (6A ; 6B ; 6C) mobile entre une position ouverte et une position fermée, dans laquelle, dans la position fermée, la porte (6A ; 6B ; 6C) se ferme et scelle la cavité ;
une serrure à commande électronique (12A ; 12B ; 12C) ; et
un système de commande (16A, 18A ; 16B, 18B ; 16C, 18C ; 52) destiné à mettre sélectivement la serrure à commande électronique (12A ; 12B ; 12C) en mode verrouillé ou en mode déverrouillé, dans lequel, en mode verrouillé, la porte (6A ; 6B ; 6C) est interdite de s'ouvrir et en mode déverrouillé, la porte (6A ; 6B ; 6C) est autorisée de s'ouvrir,
**caractérisé en ce que**
la serrure à commande électronique (12A ; 12B ; 12C) est une serrure électromagnétique (12A ; 12B ; 12C) comportant un électroaimant et une plaque d'armature, dans laquelle l'électroaimant et la plaque d'armature sont disposés pour faisant face l'une à l'autre, et l'électroaimant est associé à l'un de la porte (6A ; 6B ; 6C) ou du boîtier de réception (4A ; 4B ; 4C) et la plaque d'armature est associée à l'autre de la porte (6A ; 6B ; 6C) ou du boîtier de réception (4A ; 4B ; 4C).

2. Conteneur de cuisine d'aéronef (2B ; 2C) selon la revendication 1, dans lequel le conteneur de cuisine d'aéronef (2B ; 2C) est un four (2B ; 2C).

3. Conteneur de cuisine d'aéronef (2C) selon la revendication 2, dans lequel le four (2C) est un four à micro-ondes (2C).

4. Conteneur de cuisine d'aéronef (2A) selon la revendication 1, dans lequel le conteneur de cuisine d'aéronef (2A) est un réfrigérateur (2A).

5. Conteneur de cuisine d'aéronef (2A ; 2B ; 2C) selon l'une quelconque des revendications précédentes, comprenant en outre un joint disposé à un périmètre du boîtier de réception (4A ; 4B ; 4C) et configuré pour entrer en contact avec et sceller une surface interne de la porte (6A ; 6B ; 6C) lorsque la porte (6A ; 6B ; 6C) se trouve dans la position fermée afin de sceller la cavité.

6. Conteneur de cuisine d'aéronef (2A ; 2B ; 2C) selon l'une quelconque des revendications précédentes, dans lequel le système de commande comprend un interrupteur unique, lorsqu'un utilisateur appuie sur l'interrupteur, celui-ci passe au mode verrouillé ou au mode déverrouillé en lequel se trouve la serrure à commande électronique.

7. Conteneur de cuisine d'aéronef (2A ; 2B ; 2C) selon la revendication 6, dans lequel l'interrupteur unique est un capteur tactile.

8. Conteneur de cuisine d'aéronef (2A ; 2B ; 2C), dans lequel le capteur tactile est une électrode tactile capacitive.

9. Conteneur de cuisine d'aéronef (2A ; 2B ; 2C) selon l'une quelconque des revendications 1 à 5, dans lequel le système de commande (16A, 18A ; 16B, 18B ; 16C, 18C) comprend un premier interrupteur (16A ; 16B ; 16C) et un second interrupteur (18A ; 18B ; 18C), dans lequel lorsqu'un utilisateur appuie sur le premier interrupteur (16A ; 16B ; 16C), la serrure à commande électronique (12A ; 12B ; 12C) passe au mode verrouillé et lorsqu'un utilisateur appuie sur le second interrupteur (18A ; 18B ; 18C), la serrure à commande électronique (12A ; 12B ; 12C) passe au mode déverrouillé.

10. Conteneur de cuisine d'aéronef (2A ; 2B ; 2C) selon la revendication 9, dans lequel le premier interrupteur (16A ; 16B ; 16C) et le second interrupteur (18A ; 18B ; 18C) sont chacun un capteur tactile, éventuellement une électrode tactile capacitive.

11. Conteneur de cuisine d'aéronef (2A ; 2B ; 2C) selon l'une quelconque des revendications 1 à 5, dans lequel le système de commande comprend une unité d'identification par radiofréquence (RFID), configurée pour mettre la serrure à commande électronique (12A ; 12B ; 12C) en mode déverrouillé lorsqu'un dispositif RFID secondaire est approché de l'unité RFID, et pour mettre la serrure à commande électronique (12A ; 12B ; 12C) en mode verrouillé lorsque le dispositif RFID secondaire n'est pas à proximité de l'unité RFID.

12. Conteneur de cuisine d'aéronef (2A ; 2B ; 2C) selon l'une quelconque des revendications 1 à 5, dans lequel le système de commande comprend un émetteur-récepteur configuré pour recevoir une entrée à partir d'un dispositif (52) situé à distance du conteneur de cuisine d'aéronef (2A ; 2B ; 2C) contenant des instructions pour mettre la serrure à commande électronique (12A ; 12B ; 12C) en l'un des modes verrouillé ou déverrouillé.

13. Système de cuisine d'aéronef (50) comprenant :
une pluralité de conteneurs de cuisine d'aéronef (2A ; 2B ; 2C) selon la revendication 12 ; et
un dispositif de commande central (52), dans lequel le dispositif de commande central (52) étant le dispositif (52) situé à distance du conteneur de cuisine d'aéronef (2A ; 2B ; 2C).

14. Système de cuisine d'aéronef (50) selon la revendication 13, dans lequel le dispositif de commande central (52) est un dispositif électronique personnel portable.

15. Système de cuisine d'aéronef (50) selon la revendication 13, dans lequel le dispositif de commande central (52) est un contrôleur central pour un cockpit d'un aéronef.
